# EUROPEAN PATENT SPECIFICATION

(11) **EP 3 574 630 B1**
(45) Date of publication and mention of the grant of the patent: **03.02.2021**
(21) Application number: 18865720.9
(22) Date of filing: 19.12.2018
(51) Int. Cl.: H04L 29/08, G06F 3/06, H04L 9/32

(54) **SECRET-BASED BLOCKCHAIN STORAGE WITH PRIVACY**
AUF GEHEIMNIS BASIERENDE BLOCKCHAIN-SPEICHERUNG MIT PRIVATSSPHÄRE
MÉMORISATION DE CHAÎNE DE BLOCS SUR LA BASE D'UN SECRET EN VALORISANT L'ASPECT PRIVÉ

(43) Date of publication of application: 04.12.2019
(73) Proprietor: Advanced New Technologies Co., Ltd., George Town, Grand Cayman KY1-9008 (KY)
(72) Inventor: YING, Pengfei, Zhejiang 311121 (CN); LIU, Zheng, Zhejiang 311121 (CN)
(74) Representative: Fish & Richardson P.C.
(86) International application number: PCT/CN2018/122145
(87) International publication number: WO 2019/072298

(56) References cited:
- WO-A1-2018/124297
- WO-A1-2018/124297
- CN-A- 107 748 850
- CN-A- 107 809 484
- CN-A- 107 809 484
- CN-A- 108 959 563
- CN-A- 108 959 563
- US-A1- 2018 101 684

## Description

### BACKGROUND

Distributed ledger systems (DLSs), which can also be referred to as consensus networks, and/or blockchain networks, enable participating entities to securely, and immutably store data. DLSs are commonly referred to as blockchain networks without referencing any particular use case (e.g., crypto-currencies). Example types of blockchain networks can include public blockchain networks, private blockchain networks, and consortium blockchain networks. A public blockchain network is open for all entities to use the DLS, and participate in the consensus process. A private blockchain network is provided for a particular entity, which centrally controls read and write permissions. A consortium blockchain network is provided for a select group of entities, which control the consensus process, and includes an access control layer.

In some situations, each entity of a blockchain stores and controls its own data, e.g., in a private hash table. Although such a data storage scheme increases data security and privacy, it makes data sharing and entity cooperation difficult. CN 107 809 484 describes a block chain transaction information processing method and a block chain node. According to the method, transaction party information related to a transaction information and an address information of a block chain node where a segment of the transaction information is stored are published into the block chain network, so that the transmission pressure of the block chain network can be relieved, and the storage space of the single node in the block chain network can also be reduced, a fault caused by malicious modification on segment content performed by the block chain node is avoided, and the security of the block chain network is improved. US 2018/101684 describes a method for distributed storage of identity data. The method includes receiving entity data for a plurality of entities, the data including an associated public key, associated attributes, and a geographic jurisdiction, and where one entity is a subordinate; generating a data file for each entity including the associated attributes and public key, and where the subordinate entity's data file includes a digital signature associated with a superior entity; generating an identity value for each entity via hashing the associated data file; and storing, in a distributed hash table, a key-value pair for each entity, wherein the key is the associated identity value, the value comprises the associated attributes, and the key-value pair is stored in a physical data storage device located in a geographic area corresponding to the associated geographic jurisdiction.

### SUMMARY

The invention is about a computer implemented method as defined by the subject-matter of claim 1, a non-transitory computer-readable storage medium as defined by the subject-matter of claim 9, and a system as defined by the subject-matter of claim 10.

### DESCRIPTION OF DRAWINGS

FIG. 1 depicts an example environment that can be used to execute implementations of the present application.
FIG. 2 depicts an example conceptual architecture in accordance with implementations of the present application.
FIG. 3 depicts an example system that implements a distributed data storage scheme on a blockchain.
FIG. 4 depicts an example process that can be executed in accordance with implementations of the present application.

Like reference symbols in the various drawings indicate like elements.

### DETAILED DESCRIPTION

Implementations of the present application include computer-implemented methods for distributed data storage on a blockchain. More particularly, implementations of the present application are directed to improving data security and data sharing on a blockchain using distributed hash tables and multi-party computation. In some implementations, actions include receiving a request to store a data item in the blockchain network, and in response: dividing the data item into a plurality of data partitions; assigning each data partition to a different node in the blockchain network, wherein each node stores the assigned data partition in a privately-maintained distributed hash table; and storing information associated with each data partition in a blockchain maintained by the blockchain network, the information including a storage location of each data partition; receiving a request to retrieve the stored data item, and in response: retrieving each stored data partition from the assigned nodes based on the information including the location of each data partition stored in the blockchain; reconstructing the stored data item from the stored data partitions; and sending a response to the request to retrieve the stored data item, wherein the response includes the reconstructed data item.

To provide further context for implementations of the present application, and as introduced above, distributed ledger systems (DLSs), which can also be referred to as consensus networks (e.g., made up of peer-to-peer nodes), and blockchain networks, enable participating entities to securely, and immutably conduct transactions, and store data. Although the term blockchain is generally associated with the Bitcoin crypto-currency network, blockchain is used herein to generally refer to a DLS without reference to any particular use case. As introduced above, a blockchain network can be provided as a public blockchain network, a private blockchain network, or a consortium blockchain network.

In a public blockchain network, the consensus process is controlled by nodes of the consensus network. For example, hundreds, thousands, even millions of entities can cooperate a public blockchain network, each of which operates at least one node in the public blockchain network. Accordingly, the public blockchain network can be considered a public network with respect to the participating entities. In some examples, a majority of entities (nodes) must sign every block in order for the block to be valid, and added to the blockchain (distributed ledger) of the blockchain network. An example public blockchain network includes the Bitcoin network, which is a peer-to-peer payment network. The Bitcoin network leverages a distributed ledger, referred to as blockchain. As noted above, the term blockchain, however, is used to generally refer to distributed ledgers without particular reference to the Bitcoin network.

In general, a public blockchain network supports public transactions. A public transaction is shared with all of the nodes within the public blockchain network, and are stored in a global blockchain. A global blockchain is a blockchain that is replicated across all nodes. That is, all nodes are in perfect state consensus with respect to the global blockchain. To achieve consensus (e.g., agreement to the addition of a block to a blockchain), a consensus protocol is implemented within the public blockchain network. An example consensus protocol includes, without limitation, proof-of-work (POW) implemented in the Bitcoin network.

In general, a private blockchain network is provided for a particular entity, which centrally controls read and write permissions. The entity controls, which nodes are able to participate in the blockchain network. Consequently, private blockchain networks are generally referred to as permission networks that place restrictions on who is allowed to participate in the network, and on their level of participation (e.g., only in certain transactions). Various types of access control mechanisms can be used (e.g., existing participants vote on adding new entities, a regulatory authority can control admission).

In general, a consortium blockchain network is private among the participating entities. In a consortium blockchain network, the consensus process is controlled by an authorized set of nodes, one or more nodes being operated by a respective entity (e.g., a financial institution, insurance company). For example, a consortium of ten (10) entities (e.g., financial institutions, insurance companies) can operate a consortium blockchain network, each of which operates at least one node in the consortium blockchain network. Accordingly, the consortium blockchain network can be considered a private network with respect to the participating entities. In some examples, each entity (node) must sign every block in order for the block to be valid, and added to the blockchain. In some examples, at least a sub-set of entities (nodes) (e.g., at least 7 entities) must sign every block in order for the block to be valid, and added to the blockchain.

Implementations of the present application are described in further detail herein with reference to a public blockchain network, which is public among the participating entities. It is contemplated, however, that implementations of the present application can be realized in any appropriate type of blockchain network.

Implementations of the present application are described in further detail herein in view of the above context. More particularly, and as introduced above, implementations of the present application are directed to improving data security and data sharing on a blockchain using distributed hash tables and multi-party computation.

In some implementations, a data item is divided into different portions and each portion is stored in a hash table of an entity participating in the blockchain network. Each entity or an outside service can view the data and performs operations on the data using a program, e.g., a smart contract, deployed on the blockchain. As a result, although no single entity has access to the entire data, each entity can nevertheless get certain measurements of the data.

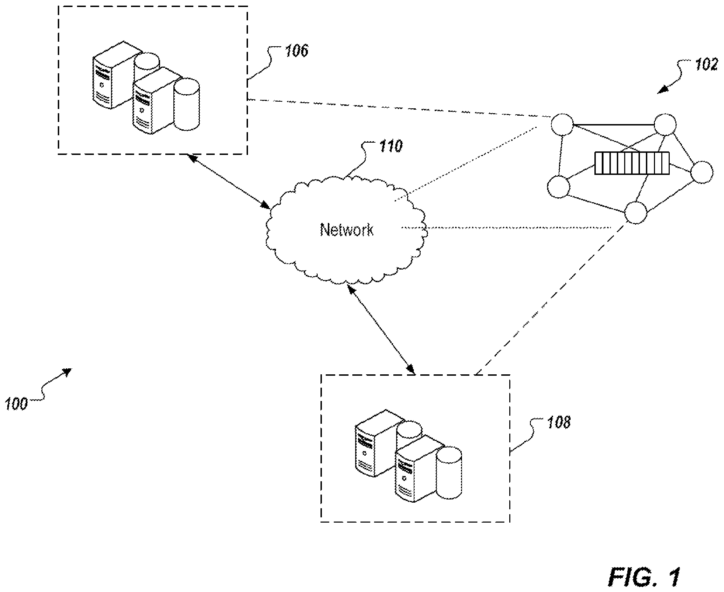

FIG. 1 depicts an example environment 100 that can be used to execute implementations of the present application. In some examples, the example environment 100 enables entities to participate in a blockchain network 102. The blockchain network 102 can be a public blockchain network, a private blockchain network, or a consortium blockchain network. The example environment 100 includes computing devices 106, 108, and a network 110. In some examples, the network 110 includes a local area network (LAN), wide area network (WAN), the Internet, or a combination thereof, and connects websites, user devices (e.g., computing devices), and back-end systems. In some examples, the network 110 can be accessed over a wired and/or a wireless communications link.

In the depicted example, the computing systems 106 and 108 can each include any appropriate computing system that enables participation as a node in the blockchain network 102. Example computing devices include, without limitation, a server, a desktop computer, a laptop computer, a tablet computing device, and a smartphone. In some examples, the computing systems 106 and 108 each hosts one or more computer-implemented services for interacting with the blockchain network 102. For example, the computing system 106 can host computer-implemented services of a first entity (e.g., user A), such as transaction management system that the first entity uses to manage its transactions with one or more other entities (e.g., other users). The computing system 108 can host computer-implemented services of a second entity (e.g., user B), such as transaction management system that the second entity uses to manage its transactions with one or more other entities (e.g., other users). In the example of FIG. 1, the blockchain network 102 is represented as a peer-to-peer network of nodes, and the computing systems 106 and 108 provide nodes of the first entity, and second entity respectively, which participate in the blockchain network 102.

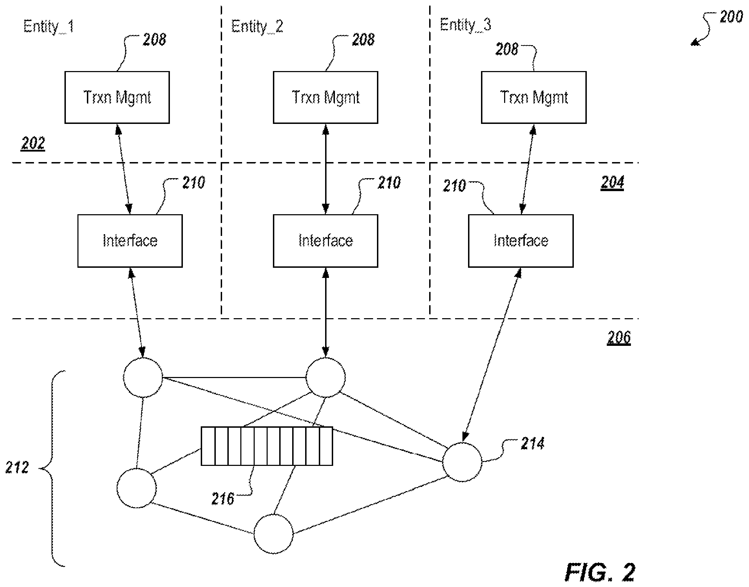

FIG. 2 depicts an example conceptual architecture 200 in accordance with implementations of the present application. The example conceptual architecture 200 includes an entity layer 202, a hosted services layer 204, and a blockchain network layer 206. In the depicted example, the entity layer 202 includes three entities, Entity_1 (E1), Entity_2 (E2), and Entity_3 (E3), each entity having a respective transaction management system 208.

In the depicted example, the hosted services layer 204 includes interfaces 210 for each transaction management system 208. In some examples, a respective transaction management system 208 communicates with a respective interface 210 over a network (e.g., the network 110 of FIG. 1) using a protocol (e.g., hypertext transfer protocol secure (HTTPS)). In some examples, each interface 210 provides a communication connection between a respective transaction management system 208, and the blockchain network layer 206. More particularly, the interface 210 communicates with a blockchain network 212 of the blockchain network layer 206. In some examples, communication between an interface 210, and the blockchain network layer 206 is conducted using remote procedure calls (RPCs). In some examples, the interfaces 210 "host" blockchain network nodes for the respective transaction management systems 208. For example, the interfaces 210 provide the application programming interface (API) for access to blockchain network 212.

As described herein, the blockchain network 212 is provided as a peer-to-peer network including a plurality of nodes 214 that immutably record information in a blockchain 216. Although a single blockchain 216 is schematically depicted, multiple copies of the blockchain 216 are provided, and are maintained across the blockchain network 212. For example, each node 214 stores a copy of the blockchain. In some implementations, the blockchain 216 stores information associated with transactions that are performed between two or more entities participating in the blockchain network.

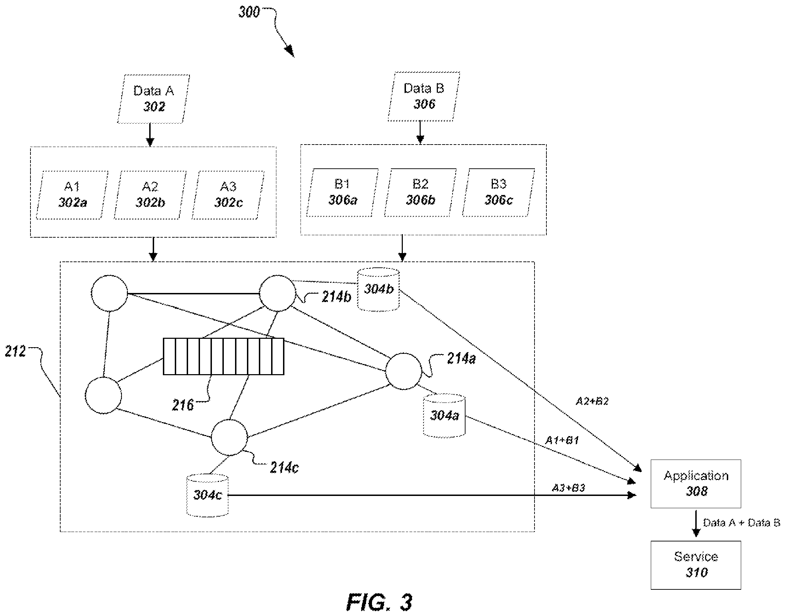

FIG. 3 depicts an example system 300 that implements a distributed data storage scheme in a blockchain network. The system 300 includes a blockchain network, e.g., the blockchain network 212 of FIG. 2, to provide data to an application 308. Each entity in the blockchain network, e.g., nodes 214a-214c, maintains a distributed hash table (DHT) to store private data not published on the blockchain 216. For example, the node 214b is associated with a DHT 304b, and the node 214c is associated with a different DHT 304c.

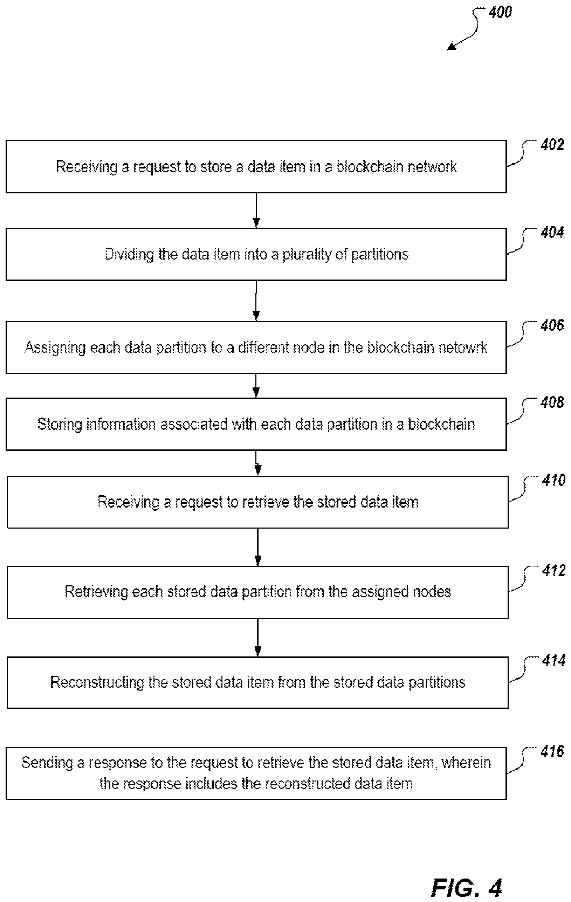

In some implementations, a user wishing to store data A 302 in the blockchain network 212 first partitions the data A 302 into two or more pieces, e.g., A1 302a, A2 302b, and A3 302c. Each of the partitioned data is sent to a different node and maintained in the node's DHT. For example, A1 302a is stored in the DHT 304a associated with the node 214a, A2 302b is stored in the DHT 304b associated with the node 214b, and A3 302c is stored in the DHT 304c associated with the node 214c. Therefore, the user's data is stored in a decentralized manner and remains secure as none of the individual storage nodes has full access to the user's data. The user's data is only restored when a trusted service requests and receives the individual data partitions from the respective storage nodes, as described below and with respect to FIG. 4.

Each node can publish the path to the stored partitioned data on the blockchain. For example, after data A is partitioned and stored in the blockchain network 212, a blockchain transaction stored in the blockchain 216 can record the location of each portion of the partitioned data, wherein the location includes the node that stores the data as well as the internal file path in the DHT associated with the node. In some implementations, the file path is a Uniform Resource Locator (URL) or other strings for identifying a data location on a network. This blockchain transaction is then included in the latest block of the blockchain 216, rendering it viewable to all nodes in the blockchain network 212. An example blockchain transaction summarizing the storing of data A is shown in table 1 below:

**Table 1**

| Data | Node | File Path | DHT Value |
|---|---|---|---|
| A | 2 | Path 1 | A1 |
| A | 3 | Path 2 | A2 |
| A | 4 | Path 3 | A3 |

To use the data A 302, a service 310 requests an application 308 to gather the partitioned data from the blockchain network 212. For example, the application 308 can be a smart contract program stored in the blockchain 216 and executing on the blockchain network 212. The application 308 can first search the blockchain 216 to locate wherein each of the partitioned data is stored, and then retrieves and generates a copy of the data A 302. In one example, the application 308 can concatenate the partitioned data A1 302a, A2 302b, and A3 302c to generate a copy of the data A 302. In another example, the application 308 can perform a summary operation on the partitioned data to restore the data A 302. In some cases, although the service 310 receives the generated copy of the data A 302 from the application 308, the service 310 does not have access to any individual data partitions. As a result, this access scheme protects data security and data privacy on individual nodes. In one example, each node can represent a bank storing a user's financial transactions in the particular bank. The service attempts to determine a home mortgage for the user based on the user's past financial transactions. Although the service has access to the users' aggregated financial transactions, e.g., the data A 302, the service does not see the user's financial transactions in any particular bank, e.g., the partitioned data A1 302a, A2 302b, and A3 302c.

In some cases, the blockchain transaction summarizing the storing of data A may include a hash of each partition of the data. The application 308 or another application processing the partitioned data can use these hashes to verify that each partition has not been changed since it was first stored. The blockchain transaction summarizing the storing of data A may also include a hash of the full set of data formed by joining all the partitions, which may be used to verify that the data has not been changed since it was originally partitioned and stored.

In some cases, the application 308 can record the operations on the blockchain 216. For example, the application 308 can record the identity of the service 310 that requested the data, the success or failure of the data retrieval operation, the time of the operations, or other information pertaining to the operations. This information can serve as an access log for recording each time a particular data item is retrieved.

In some implementations, once the application 308 finishes retrieving data and the transaction is verified by the blockchain network 212, each of the storing nodes can be rewarded a specified amount of digital currency supported by the blockchain network 212. This reward may serve as an incentive for nodes in the blockchain network 212 to participate in the distributed data storage scheme. The retrieved data is then returned to the service 310 for further operations.

In some cases, requests for the data may be subject to authentication. For example, a service 310 may be required to provide its identity or other credentials with its request for the data. The system may include permissions for each data item stored in the blockchain network, and may verify that the service 310 is authorized to view the data item based on the credentials prior to reconstructing the data item from the partitioned pieces. In some implementations, the blockchain transaction summarizing the storing of data A (shown above in Table 1) may include permission information for each data partition or for the full data item.

In some cases, the blockchain transaction summarizing the storing of data A may include an encrypted hash value for the data item that the service 310 must correctly decrypt to prove it is authorized to access the stored data item. For example, in a case where the user that stored the data item wishes to be the only one with permission to access it, the hash could be encrypted with the user's public key, and thus only be decrypted using the user's private key. In some implementations, the data item itself may be encrypted prior to being partitioned and stored in the blockchain network, thereby allowing only entities with the correct key to decrypt the contents once the partitions are reassembled and returned.

FIG. 4 depicts an example process 400 that can be executed in accordance with implementations of the present application. In some implementations, the process 400 may be performed using one or more computer-executable programs executed using one or more computing devices. For convenience, the process 400 will be described as being performed by a system, e.g., the system 300 of FIG. 3.

The system first receives a request to store a data item in a blockchain network (402). For example, a user can submit bank transaction data for storage in the blockchain network. Storing the data using the techniques described herein may improve the security of the blockchain network since the data is stored in a decentralized manner and no single node in the blockchain network stores the entire data.

In response to the request, the system receives the data item and divides it into a plurality of data partitions (404). For example, the system can use a program to partition the data into equal-sized chunks, or partition the data based into a number of chunks specified by the user. In some cases, the system can record how the data was partitioned and store the partitioning method with the individual data partition or in an entry within the blockchain.

The system next assigns each data partition to a different node in the blockchain network and stores information associated with each data partition in a blockchain (406). The different nodes do not share the assigned data and store the assigned data in a privately maintained distributed hash table (DHT). For example, the distributed hash table can store the file path to the data partition, the identity of the node, and the value of the data partition or a hash of the value. The system then stores information associated with each data partition in the blockchain (408). For example, the system and publish on the blockchain file path to each data partition. As a result, the location of the data partitions become public to any programs interacting with the blockchain. The system can select the storing nodes in a random manner to ensure that no single node can have access to all the data partitions. In some implementations, the system can select the storing nodes so that no node stores more than a certain number of partitions of the data. As a result, the data item is stored in a decentralized fashion and remains secure as none of the storage nodes has full access to all the data partitions. The data item is only restored when a trusted service requests and receives the data partitions.

The system then receives a request to retrieve the stored data item (410). For example, a third-party service can request to see the user's banking transactions to determine the user's creditworthiness. The service can submit the request to the system using an application programming interface (API) supported by the system. For example, the request can be in a JSON file format. At this point, the data is partitioned and scattered across the blockchain network.

To return the requested data, which is partitioned and stored on different nodes in the blockchain network, the system uses an application and the publicized file paths to retrieve each stored data partition from the assigned nodes in the blockchain network (412). For example, the application can be a smart contract that has been granted access to each node's distributed hash table. The application can perform specified instructions to reconstruct the data from the data partitions. In some cases, the instructions are written on the blockchain when the data was first partitioned. The system then reconstructs the stored data item from the stored data partitions. For example, the system can concatenate the data partitions, or perform addition on the data values such as by returning hashes of the data values (414). In another example, the system can interlace the data partitions to reconstruct the stored data item when each data partition includes non-continuous bits of data from the data item. In some cases, the system also records the data request by the service in the blockchain. This information can be used to compensate the storing node based on the size of the data partition and the length of the storage.

As the last step, the system sends a response to the request to retrieve the stored data item, wherein the response includes the reconstructed data item (416). For example, the system can send the response to the application 308. In some implementations, the system audits the data partitions and the reconstructed data item before sending the response. For example, the system can audit the data item or the individual data partitions by checking the hash values.

The features described may be implemented in digital electronic circuitry, or in computer hardware, firmware, software, or in combinations of them. The apparatus may be implemented in a computer program product tangibly embodied in an information carrier (e.g., in a machine-readable storage device) for execution by a programmable processor; and method steps may be performed by a programmable processor executing a program of instructions to perform functions of the described implementations by operating on input data and generating output. The described features may be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that may be used, directly or indirectly, in a computer to perform a certain activity or bring about a certain result. A computer program may be written in any form of programming language, including compiled or interpreted languages, and it may be deployed in any form, including as a stand-alone program or as a module, component, subroutine, or another unit suitable for use in a computing environment.

Suitable processors for the execution of a program of instructions include, by way of example, both general and special purpose microprocessors, and the sole processor or one of the multiple processors of any kind of computer. Generally, a processor will receive instructions and data from a read-only memory or a random access memory or both. Elements of a computer may include a processor for executing instructions and one or more memories for storing instructions and data. Generally, a computer may also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by ways of example semiconductor memory devices, such as EPROM, EEPROM, and flash memory devices; magnetic disks such as internal hard disks and removable disks; magneto-optical disks; and CD-ROM and DVD-ROM disks. The processor and the memory may be supplemented by, or incorporated in, application-specific integrated circuits (ASICs).

To provide for interaction with a user, the features may be implemented on a computer having a display device such as a cathode ray tube (CRT) or liquid crystal display (LCD) monitor for displaying information to the user and a keyboard and a pointing device such as a mouse or a trackball by which the user may provide input to the computer.

The features may be implemented in a computer system that includes a back-end component, such as a data server, or that includes a middleware component, such as an application server or an Internet server, or that includes a front-end component, such as a client computer having a graphical user interface or an Internet browser, or any combination of them. The components of the system may be connected by any form or medium of digital data communication such as a communication network. Examples of communication networks include, e.g., a local area network (LAN), a wide area network (WAN), and the computers and networks forming the Internet.

The computer system may include clients and servers. A client and server are generally remote from each other and typically interact through a network, such as the described one. The relationship of client and server arises by virtue of computer programs running on the respective computers and having a client-server relationship to each other.

In addition, the logic flows depicted in the figures do not require the particular order shown, or sequential order, to achieve desirable results. In addition, other steps may be provided, or steps may be eliminated, from the described flows, and other components may be added to, or removed from, the described systems.

## Claims

1. A computer-implemented method (400) for distributed data storage in a blockchain network (102, 212), the method comprising:
receiving (402) a request to store a data item in the blockchain network;
in response to receiving the request:
dividing (404) the data item into a plurality of data partitions;
assigning (406) each data partition to a different node in the blockchain network, wherein each node stores the assigned data partition in a privately-maintained distributed hash table and the different nodes do not share the assigned data partition; and
storing (408) information associated with each data partition in a blockchain (216) maintained by the blockchain network, the information including a storage location of each data partition.

2. The method (400) of claim 1, further comprising:
receiving (410) a request to retrieve the stored data item; and
in response to receiving the request to retrieve the stored data item:
retrieving (412) each stored data partition from the assigned nodes based on the information including the location of each data partition stored in the blockchain (216);
reconstructing (414) the stored data item from the stored data partitions; and
sending (416) a response to the request to retrieve the stored data item, wherein the response includes the reconstructed data item.

3. The method (400) of claim 1, further comprising storing instructions in the blockchain for restoring the data item from the stored data partitions.

4. The method (400) of claim 2, wherein reconstructing the stored data item includes concatenating the retrieved data partitions to generate a copy of the data item.

5. The method (400) of claim 2, further comprising storing a record of the request to retrieve the stored data item in the blockchain (216).

6. The method (400) of claim 2, wherein retrieving each stored data partition, reconstructing the stored data item from the stored data partitions, and sending the response to the request to retrieve are performed by a smart contract stored in the blockchain (216) and executing on the blockchain network (102, 212).

7. The method (400) of claim 1, wherein each distributed hash table stores the file path to the data partition, the value of the data partition, and an identity of the associated node.

8. The method (400) of claim 1, wherein storing information associated with each data partition in the blockchain (216) includes storing a path to each data partition on the blockchain.

9. A non-transitory computer-readable storage medium coupled to one or more computers (106, 108) and configured with instructions executable by the one or more computers to perform the method (400) of any one of claims 1 to 8.

10. A system (300), comprising:
one or more computers (106, 108); and
one or more computer-readable memories coupled to the one or more computers and configured with instructions executable by the one or more computers to perform the method (400) of any one of claims 1 to 8.

## Patentansprüche

1. Computerimplementiertes Verfahren (400) zum verteilten Datenspeichern in einem Blockchain-Netzwerk (102, 212), wobei das Verfahren Folgendes umfasst:
Empfangen (402) einer Anforderung zum Speichern eines Datenelements in dem Blockchain-Netzwerk;
als Reaktion auf ein Empfangen der Anforderung:
Teilen (404) des Datenelements in mehrere Datenpartitionen;
Zuweisen (406) jeder Datenpartition zu einem anderen Knoten in dem Blockchain-Netzwerk, wobei jeder Knoten die zugewiesene Datenpartition in einer privat verwalteten verteilten Hash-Tabelle speichert und die verschiedenen Knoten die zugewiesene Datenpartition nicht gemeinsam nutzen; und
Speichern (408) von Informationen, die mit jeder Datenpartition in einer Blockchain (216) verknüpft sind, die von dem Blockchain-Netzwerk verwaltet wird, wobei die Informationen einen Speicherort jeder Datenpartition einschließen.

2. Verfahren (400) nach Anspruch 1, ferner Folgendes umfassend:
Empfangen (410) einer Anforderung zum Abrufen des gespeicherten Datenelements; und
als Reaktion auf das Empfangen der Anforderung zum Abrufen des gespeicherten Datenelements:
Abrufen (412) jeder gespeicherten Datenpartition aus den zugewiesenen Knoten basierend auf den Informationen einschließlich des Speicherorts jeder in der Blockchain (216) gespeicherten Datenpartition;
Rekonstruieren (414) des gespeicherten Datenelements aus den gespeicherten Datenpartitionen; und
Senden (416) einer Antwort auf die Anforderung zum Abrufen des gespeicherten Datenelements, wobei die Antwort das rekonstruierte Datenelement einschließt.

3. Verfahren (400) nach Anspruch 1, ferner umfassend ein Speichern von Anweisungen in der Blockchain zum Wiederherstellen des Datenelements aus den gespeicherten Datenpartitionen.

4. Verfahren (400) nach Anspruch 2, wobei das Rekonstruieren des gespeicherten Datenelements ein Verketten der abgerufenen Datenpartitionen einschließt, um eine Kopie des Datenelements zu erzeugen.

5. Verfahren (400) nach Anspruch 2, ferner umfassend ein Speichern eines Datensatzes der Anforderung zum Abrufen des gespeicherten Datenelements in der Blockchain (216).

6. Verfahren (400) nach Anspruch 2, wobei das Abrufen jeder gespeicherten Datenpartition, das Rekonstruieren des gespeicherten Datenelements aus den gespeicherten Datenpartitionen und das Senden der Antwort auf die Anforderung zum Abrufen von einem in der Blockchain (216) gespeicherten Smart Contract durchgeführt und ein Ausführen in dem Blockchain-Netzwerk (102, 212).

7. Verfahren (400) nach Anspruch 1, wobei jede verteilte Hash-Tabelle den Dateipfad zu der Datenpartition, den Wert der Datenpartition und eine Identität des verknüpften Knotens speichert.

8. Verfahren (400) nach Anspruch 1, wobei das Speichern von Informationen, die mit jeder Datenpartition in der Blockchain (216) verknüpft sind, ein Speichern eines Pfads zu jeder Datenpartition in der Blockchain einschließt.

9. Nichtflüchtiges computerlesbares Speichermedium, das an einen oder mehrere Computer (106, 108) gekoppelt und mit Anweisungen konfiguriert ist, die von dem einen oder den mehreren Computern ausgeführt werden können, um das Verfahren (400) nach einem der Ansprüche 1 bis 8 durchzuführen.

10. System (300), Folgendes umfassend:
einen oder mehrere Computer (106, 108); und
einen oder mehrere computerlesbare Speicher, die mit dem einen oder den mehreren Computern gekoppelt und mit Anweisungen konfiguriert sind, die von dem einen oder den mehreren Computern ausgeführt werden können, um das Verfahren (400) nach einem der Ansprüche 1 bis 8 durchzuführen.

## Revendications

1. Procédé (400) mis en œuvre par ordinateur pour un stockage de données distribué dans un réseau de chaînes de blocs (102, 212), le procédé comprenant :
la réception (402) d'une demande de stockage d'un élément de données dans le réseau de chaînes de blocs ;
en réponse à la réception de la demande :
la division (404) de l'élément de données en une pluralité de partitions de données ;
l'attribution (406) de chaque partition de données à un nœud différent dans le réseau de chaînes de blocs, chaque nœud stockant la partition de données attribuée dans une table de hachage distribuée gérée de manière privée et les différents nœuds ne partagent pas la partition de données attribuée ; et
le stockage (408) d'informations associées à chaque partition de données dans une chaîne de blocs (216) maintenue par le réseau de chaînes de blocs, les informations comportant un emplacement de stockage de chaque partition de données.

2. Procédé (400) selon la revendication 1, comprenant en outre :
la réception (410) d'une demande de récupération de l'élément de données stocké ; et
en réponse à la réception de la demande de récupération de l'élément de données stocké :
la récupération (412) de chaque partition de données stockée à partir des nœuds attribués sur la base des informations comportant l'emplacement de chaque partition de données stockée dans la chaîne de blocs (216) ;
la reconstruction (414) de l'élément de données stocké à partir des partitions de données stockées ; et
l'envoi (416) d'une réponse à la demande de récupération de l'élément de données stocké, la réponse comportant l'élément de données reconstruit.

3. Procédé (400) selon la revendication 1, comprenant en outre le stockage d'instructions dans la chaîne de blocs pour restaurer l'élément de données à partir des partitions de données stockées.

4. Procédé (400) selon la revendication 2, dans lequel la reconstruction de l'élément de données stocké comporte la concaténation des partitions de données récupérées pour générer une copie de l'élément de données.

5. Procédé (400) selon la revendication 2, comprenant en outre le stockage d'un enregistrement de la demande de récupération de l'élément de données stocké dans la chaîne de blocs (216).

6. Procédé (400) selon la revendication 2, dans lequel la récupération de chaque partition de données stockée, la reconstruction de l'élément de données stocké à partir des partitions de données stockées et l'envoi de la réponse à la demande de récupération sont effectués par un contrat intelligent stocké dans la chaîne de blocs (216) et s'exécutant sur le réseau de chaînes de blocs (102, 212).

7. Procédé (400) selon la revendication 1, dans lequel chaque table de hachage distribuée stocke le chemin de fichier vers la partition de données, la valeur de la partition de données et une identité du nœud associé.

8. Procédé (400) selon la revendication 1, dans lequel le stockage d'informations associées à chaque partition de données dans la chaîne de blocs (216) comporte le stockage d'un chemin vers chaque partition de données sur la chaîne de blocs.

9. Support de stockage non transitoire lisible par ordinateur couplé à un ou plusieurs ordinateurs (106, 108) et configuré avec des instructions pouvant être exécutées par les un ou plusieurs ordinateurs afin d'effectuer le procédé (400) selon l'une quelconque des revendications 1 à 8.

10. Système (300), comprenant :
un ou plusieurs ordinateurs (106, 108) ; et
une ou plusieurs mémoires lisibles par ordinateur couplées aux un ou plusieurs ordinateur et configurées avec des instructions pouvant être exécutées par les un ou plusieurs ordinateurs afin d'effectuer le procédé (400) selon l'une quelconque des revendications 1 à 8.
